# EUROPÄISCHE PATENTSCHRIFT

(11) **EP 0 362 129 B1**
(45) Veröffentlichungstag und Bekanntmachung des Hinweises auf die Patenterteilung: **22.06.1994**
(21) Anmeldenummer: 89810651.3
(22) Anmeldetag: 01.09.1989
(51) Int. Cl.: C08K 13/02, C08K 3/30, C09D 7/12, C09D 5/36

(54) **Lacke enthaltend Molybdändisulfid**
Paint containing molybdenum disulfide
Revêtement contenant du bisulfide de molybdène

(30) Priorität: 09.09.1988 CH 3372/88
(43) Veröffentlichungstag der Anmeldung: 04.04.1990
(73) Patentinhaber: CIBA-GEIGY AG, 4002 Basel (CH)
(72) Erfinder: Bäbler, Fridolin, Dr., CH-1723 Marly (CH)

(56) Entgegenhaltungen:
- EP-A- 0 101 668
- US-A- 2 945 770
- CHEMICAL ABSTRACTS, Band 91, Nr. 26, 24. Dezember 1979, Seite 38,Zusammenfassung Nr. 212342s, Columbus, Ohio, US;& SU-A-688 508
- CHEMICAL ABSTRACTS, Band 103, Nr. 20, 18. November 1985, Seite 78, Zusammenfassung Nr. 161940s, Columbus, Ohio, US; & JP-A-60 94 466

## Beschreibung

Die vorliegende Erfindung betrifft Anstrichstoffe enthaltend Molybdändisulfid und ihre Verwendung zum Färben von Oberflächen, insbesondere von Metalloberflächen.

Metallische Oberflächen werden bekanntlich oft mit Ueberzugskompositionen gefärbt, welche zur Erzielung bestimmter Farbeffekte, wie metallische Effekte, insbesondere auf dem Gebiet der Automobillackierung Metallpulver bestimmter Korngrössen enthalten.

So ist z.B. gemäss US-PS Nr. 4 081 423 bekannt, dekorative Ueberzugskompositionen enthaltend ein organisches Bindemittel, ein Metallpulver einer bestimmten Korngrösse, wie Kupfer, Bronze, Eisen, Zinn, Zink und edle Metalle, und eine bestimmte Menge Graphit zur Erzielung eines metallischen Effektes einzusetzen.

Ferner ist gemäss EP-Patentanmeldung Nr. 0268072 bekannt, plättchenförmige Eisenoxidpigmente als Effektpigmente, z.B. in Lacken, zu verwenden.

Es ist gemäss US-PS Nr. 4 517 320 weiterhin bekannt, Einbrennlackschichten mit einem metallischen Effekt ohne Mitverwendung von Metallteilchen herzustellen, indem man Lacke enthaltend als farbgebende Komponente eine Kombination einer bestimmten Menge Graphit mit mindestens einem organischen Pigment oder polymerlöslichen Farbstoff verwendet. Damit können zwar neuartige Farbnuancen mit metallischen Effekten erzielt werden, die so erhaltenen Nuancen sind jedoch wegen der grauschwarzen Eigenfarbe des verwendeten Graphits relativ dunkel.

Ausserdem ist bekannt, Molybdändisulfid als Schmiermittel in flüssigen Ueberzugskompositionen (vgl. z.B. EP Patentanmeldung Nr. 0156437) oder als Perlglanzpigment (vgl. US-PS 2 945 770) zur Erzielung dunkel blauer perlmuttartiger Effekte in bestimmten Ueberzugslacken zu verwenden.

Mit derartigen Kompositionen können jedoch nur dunkelblaue bis schwarze Lackschichten hergestellt werden.

Es wurde nun gefunden, dass man Lackschichten mit einem metallischen Effekt ohne Mitverwendung von Metallpulvern herstellen kann, wenn als farbgebende Komponente eine bestimmte Menge Molybdändisulfid in Kombination mit mindestens einem organischen Pigment und/oder einem polymerlöslichen organischen Farbstoff und/oder einem Perlglanzpigment verwendet wird. Damit können sogenannte Metallisé-Farbeffekte hoher Reinheit und mit deutlich helleren Nuancen als mit der entsprechenden Graphit enthaltenden Kombinationen hergestellt werden, so dass sich mit derartigen Stoffzusammensetzungen neue Stylingsmöglichkeiten für die Kosmetik- und insbesondere für die Automobilindustrie eröffnen. Ausserdem werden mit Molybdändisulfid kleinere Mengen an organischen Pigmenten oder polymerlöslichen Farbstoffen als mit Graphit benötigt, was oft einen günstigen Einfluss auf die Rheologie der damit hergestellten Lacke hat.

Die Erfindung betrifft demnach Anstrichstoffe zur Herstellung einer Lackschicht mit einem metallischen Effekt ohne Mitverwendung von Metallpulvern, dadurch gekennzeichnet, dass der Anstrichstoff als farbgebende Komponente 0,001 bis 30 Gew.% mindestens eines organischen Pigmentes und/oder eines polymerlöslichen organischen Farbstoffes und/oder eines Perlglanzpigmentes und 0,001 bis 30 Gew.% Molybdändisulfid, bezogen auf die damit hergestellte trockene Lackschicht, enthält.

Als Anstrichstoffe eignen sich z.B. hitzehärtende, luft- oder physikalisch trocknende sowie auch chemisch vernetzende bzw. reaktive Lacke, insbesondere aber Einbrennlacke, wie die üblichen bei erhöhter Temperatur reagierenden Bindemittel aus der Gruppe bestehend aus Acryl-, Alkyd-, Epoxy-, Phenol-, Melamin-, Harnstoff-, Polyester-, Polyurethan-, blockierten Isocyanat-, Benzoguanamin- oder Celluloseesterharzen, oder Kombinationen davon. Als luft- oder physikalisch trocknende Lacke seien insbesondere die in der Kosmetikindustrie, beispielsweise zur Herstellung von Nagellacken, üblichen und dem Fachmann bekannten Lacke, wie z.B. die konventionellen Lacke auf Basis von Nitrocellulose, erwähnt.

Bevorzugt verwendet man die in der Automobilindustrie gebräuchlichen Lacke, wie insbesondere Acryl-Melamin-, Alkyd-Melamin- oder thermoplastische Acrylharze, sowie insbesondere wässrige Bindemittelsysteme.

Die mit den erfindungsgemässen Anstrichstoffen erhaltenen trockenen Lackschichten weisen bevorzugt eine Dicke von 3-60 »m, insbesondere von 7 bis 25 »m, auf und sind in der Regel einschichtig.

Die Lackschicht kann mit einer oder mehreren Klarlackschichten überzogen sein. Für den Klarlack werden als Bindemittel bevorzugt hitzehärtbare Acryl-Melaminharzkombinationen eingesetzt, wie sie an sich auf dem Gebiet der Automobillackierung bekannt sind. Die trockene Klarlackschicht hat eine Dicke von vorzugsweise 30 bis 60 »m.

Als Molybdändisulfid eignet sich insbesonders Molybdändisulfid in Schuppen- oder Plättchenform mit einem Teilchen-Durchmesser von weniger als 100 »m und einer Dicke von bis zu 4 »m.

Die optimalen metallischen Farbeffekte lassen sich durch Variieren der Molybdändisulfidmenge innerhalb des angegebenen Bereiches festlegen. Bevorzugt verwendet man 1,0 bis 15,0 Gew.-% Molybdändisulfid, bezogen auf die trockene Lackschicht.

Besonders bevorzugt eignet sich schuppen- oder plättchenförmiges Molybdändisulfid mit 60-95 Gew.% der Partikel, die einen Median-Wert von 1-12 »m aufweisen. Zweckmässig weisen sie eine Grösse von 0,1 bis 24 »m auf.

Beispiele von organischen Pigmenten sind Azo-, Azomethin-, Methin-, Anthrachinon-, Phthalocyanin-, Perinon-, Perylen-, Dioxazin-, Diketopyrrolopyrrol-, Thioindigo-, Iminoisoindolin-, Iminoisoindolinon-, Chinacridon-, Chinacridonchinon-, Flavanthron-, Indanthron-, Anthrapyrimidin- oder Chinophthalonpigmente, ferner Metallkomplexe von z.B. Azo-, Azomethin- oder Methinfarbstoffen. Besonders bevorzugt sind die für die Herstellung von Automobillacken geeigneten Pigmente, wie die verschiedenen Kristallmodifikationen von Cu-Phthalocyanin, Indanthronblau, β- und γ-Chinacridone, C.I. Pigment Rot 177, Rot 179, Rot 224, Rot 254 und Rot 255, C.I. Pigment Gelb 24, Gelb 109, Gelb 110, Gelb 128, Gelb 129, Gelb 177 und Gelb 179, sowie C.I. Pigment Orange 48, Orange 49, Orange 61, Orange 65 und Orange 66.

Als polymerlösliche organische Farbstoffe eignen sich z.B. Phthalocyaninfarbstoffe oder Metallkomplexe von Azofarbstoffen, vor allem 1:2-Chrom- oder 1:2-Kobaltkomplexe von Monoazofarbstoffen, ferner auch Fluoreszenzfarbstoffe, wie solche aus der Cumarin-, Naphthalimid-, Pyrazolin-, Acridin-, Xanthen-, Thioxanthen-, Oxazin-, Thiazin- oder Benzthiazolreihe. Metallkomplexe von Azofarbstoffen sind jedoch bevorzugt.

Die erfindungsgemässen Anstrichstoffe enthalten neben dem Molybdändisulfid bevorzugt nur ein organisches Pigment oder nur einen polymerlöslichen organischen Farbstoff, insbesondere aber nur ein organisches Pigment, vor allem ein transparentes organisches Pigment.

Beispiele von Perlglanzpigmenten sind natürliche und künstliche Perlglanz- und Perlmuttglanzpigmente, wie die silbrig-weissen Perlglanzpigmente, wie z.B. die sogenannten natürlichen "Fischsilber", oder als synthetische Perlglanzpigmente basisches Bleicarbonat, Wismuthoxidchlorid, Wismuthoxidchlorid auf Träger und insbesondere die Titandioxid-Glimmer-Pigmente, wobei die letzteren auch andere farbgebende Metalloxide, wie Eisen-, Kobalt-, Mangan- oder Chromoxide, enthalten können.

In den erfindungsgemässen Anstrichstoffen liegt das organische Pigment und/oder der polymerlösliche Farbstoff und/oder das Perlglanzpigment bevorzugt in Mengen von 1,0 bis 10,0 Gew.-%, bezogen auf die damit hergestellte trockene Lackschicht, vor.

Ausgehend vom handelsüblichen Molybdändisulfid lässt sich Molybdändisulfid in der bevorzugten Teilchenbeschaffenheit auf bekannte Art erhalten, wie beispielsweise durch Mahlen in Luftstrahl-, Sand- oder Kugelmühlen. So erhält man ausgeprägt flächige, plättchen- oder schuppenförmige Molybdändisulfidteilchen, beispielsweise durch Nassmahlung von grobkristallinem Molybdändisulfid in einer Mahlvorrichtung, die Metall-, Glas- oder Porzellankugeln, Kunststoffgranulat oder Sandkörner als Mahlkörper enthält. Diese Mahlkörper werden dabei beispielsweise durch Rotation des Gefässes, oder durch Schwingungserzeuger oder Rührer in Bewegung gesetzt.

Es kann von Vorteil sein, das Pigment und/oder den polymerlöslichen Farbstoff und/oder das Perlglanzpgigment und/oder Molybdändisulfid vor der Verwendung in der erfindungsgemässen Anstrichstoffzusammensetzung mit einem Texturschutzmittel zu behandeln. Bevorzugt vewendet man ein Molybdändisulfid, das mit einem Texturschutzmittel behandelt wurde, beispielsweise vor, während oder nach der Behandlung/Zerkleinerung. Dabei verwendet man bevorzugt 0,02 bis 25 Gew.-% eines Texturschutzmittels, bezogen auf die eingesetzte Molybdändisulfidmenge.

Geeignete Texturschutzmittel sind beispielsweise Fettsäuren mit mindestens 12 C-Atomen, wie Stearinsäure oder Behensäure, deren Amide, Salze oder Ester, wie Magnesiumstearat, Zinkstearat, Aluminiumstearat oder Magnesiumbehenat, ferner quartäre Ammoniumverbindungen, wie Tri-(C₁-C₄)-alkylbenzylammoniumsalze, ferner Weichmacher, wie epoxidiertes Sojabohnenöl, Wachse, wie Polyäthylenwachs, Harzsäuren, wie Abietinsäure, Kolophoniumseife, hydriertes oder dimerisiertes Kolophonium, ferner C₁₂-C₁₈-Paraffindisulfonsäuren, Alkylphenole, Alkohole, Diole oder Polyole mit mindestens 5 C-Atomen.

Die erfindungsgemässen Anstrichstoffe enthalten bevorzugt ein mit Stearinsäure, Stearylamin, hydrierter Abietinsäure, epoxidiertem Sojabohnenöl oder einem 1,2-Diol, insbesondere mit Hexandiol-(1,2), Octandiol-(1,2) oder Dodecandiol-(1,2), behandeltes Molybdändisulfid.

Zur Herstellung der Lackschichten können Molybdändisulfid und organisches Pigment bzw. polymerlöslicher Farbstoff bzw. Perlglanzpigment einzeln oder vorgemischt nach bekannten Methoden in das Bindemittel eindispergiert werden. Dabei können weitere nichtflüchtige Bestandteile zugegeben werden, wie Weichmacher, Hilfsstoffe, Füllstoffe, Lichtschutzmittel, Hitzestabilisatoren, Antioxidantien und anorganische Pigmente wie TiO₂. Der homogenisierte Lack kann beispielsweise durch Streichen, Rollen, Spritzen, Tauchen oder Walzen (Coil-Coating) auf dem Substrat aufgetragen und getrocknet bzw. eingebrannt werden.

Eine Klarlackschicht kann ebenfalls nach bekannten Verfahren hergestellt werden und kann zudem Zusatzstoffe, wie Lichtschutzmittel und Antioxidantien, enthalten.

Erfindungsgemäss in Frage kommende Substrate sind z.B. Holz-, Papier-, Keramik-, Glas-, Kunststoff- und inbesondere Metalloberflächen, sowie kosmetische Unterlagen, wie Nägel.

Mit den feinkristallinen schuppen- bzw. plättchenförmigen Molybdändisulfidpartikeln in den anmeldungsgemässen Lackschichten erzielt man einen metallischen Effekt mit einem feinen, hellen, gleichmässig schimmernden Glanz. Der metallische Effekt ist besonders ausgepragt, wenn die Lackschicht von direktem Licht aus einer künstlichen Lichtquelle oder von der Sonne beschienen wird. Dabei wird das Licht teilweise an den im Lack vorhandenen Molybdändisulfidpartikeln reflektiert, was sich in einem deutlich erkennbaren Glitzern äussert. Dieser besondere Glanzeffekt kann beispielsweise mit einem Goniophotometer gemessen werden.

Die Verwendung von Molybdändisulfid gemäss der vorliegenden Erfindung ist wirtschaftlich. Die Hitze-, Licht- und Wetterbeständigkeit von Molybdändisulfid selbst wie der definitionsgemässen Lackschichten sind ausgezeichnet. Ausserdem lässt sich Molybdändisulfid sehr gut in das Trägermaterial einarbeiten und verursacht nur eine geringe Abnützung der Apparaturen und eine geringe Bremswirkung. Vor allem erhält man gleichmässige Färbungen mit optisch interessanten Eigenschaften.

Die erfindungsgemässen Lackschichten mit Metallic-Effekt werden hauptsächlich zum Färben von Metalloberflächen, insbesondere in der Automobilindustrie (Car-finishes), verwendet. Dort können metallische Farbeffekte erhalten werden, ohne dass Metallpulver, wie Aluminium oder Kupfer, mitverwendet werden. Dies ist besonders für wässrige Bindemittelsysteme wichtig, worin bekanntlich die Metallpulver, wie Aluminium, unstabil sind (Hydrolyse).

In den folgenden Beispielen bedeuten Teile, sofern nicht anders angegeben, Gewichtsteile.

Beispiel 1: In einer 500 ml fassenden Glasperlmühle werden 15,5 g Molybdän-IV-sulfid [Firma FLUKA AG] mit einer Teilchengrösse von kleiner als 350 »m, und 0,5 g Octandiol-1,2 in 120 ml Wasser verrührt. Man gibt zur Suspension 400 g Glaskugeln mit einem Durchmesser von 3,5-4,0 mm und mahlt die Mischung während 9 Stunden bei einer Temperatur von ca. 20°C und einer Rührgeschwindigkeit von 320 U/Min. Die Umlaufgeschwindigkeit des verwendeten Metallflügelrührers mit einem Durchmesser von 5,5 cm beträgt 0,92 m/sec. Die Molybdändisulfidsuspension wird dann von den Glaskugeln abgetrennt, welche mit Wasser noch etwas nachgewaschen, dann abfiltriert werden. Man wäscht den Rückstand mit Wasser und trocknet ihn bei 70-80°C im Vakuumtrockenschrank. Man erhält 15,2 g eines grauen Molybdändisulfids, welches sich nach dem Pulverisieren einwandfrei in Automobillacke einarbeiten und dann einbrennen lässt. Rasterelektronenmikroskopische Aufnahmen des so konditionierten Molybdändisulfids zeigen Partikel mit einem ausgeprägten schuppen- bis plättchenformigen Aussehen. Eine Teilchengrössenbestimmung, ausgeführt auf dem Gerät Granulometer 715 E 598 der Firma CILAS, F-91460 Marcoussis/FR, ergibt einen Partikel-Anteil von 85 % mit einer Grösse von 6-24 »m und einem Medianwert von 9,6 »m.

Beispiel 2: 3 g des nach Beispiel 1 erhaltenen Molybdändisulfids und 3 g Cu-Phthalocyaninpigment C.I. Pigment Blau 15:3 werden in 20 g eines Gemisches folgender Zusammensetzung eingerührt: 50 g Solvesso® 150 (Gemisch aromatischer Kohlenwasserstoffe, ESSO), 15 g Butylacetat, 5 g Exkin II® (Verlaufmittel auf Ketoximbasis), 25 g Methylisobutylketon und 5 g Silikonöl (1 % in Solvesso 150®). Nachdem eine vollständige Feinverteilung erreicht ist, werden 48,3 g Baycryl L 530® (Acrylharz, 51 %-ig in Xylol/Butanol 3:1) und 23,7 g Maprenal TTX® (Melaminharz, 55 %-ig in Butanol) zugesetzt. Nach kurzem Homogenisieren wird der Anstrichstoff bzw. Lack durch Spritzen auf ein Metallblech appliziert und während 30 Minuten bei 130°C eingebrannt. Die erhaltenen Lackschichten weisen eine metallisch schimmernde blaue Färbung mit ausgezeichneten Echtheiten auf. Der Lack zeichnet sich durch einen sehr guten Verlauf und eine ausgezeichnete Verteilung der Pigmente aus.

### Beispiel 3:

25,2 g Dynapol H 700® (Polyesterharz, 60 %-ig in Solvesso 150®, Dynamit Nobel),
2,7 g Maprenal MF 650® (Melaminharz, 55 %-ig in Butanol, Hoechst),
15,5 g Celluloseacetobutyrat 531.1® (25 %-ig in Xylol/Butylacetat 1:2, Eastman Chemical International),
1,1 g Irgarol TZ6® (Katalysator auf Mineralöl- und Carboxylatbasis, Ciba-Geigy),
23,3 g Butylacetat,
11,6 g Xylol,
11,6 g Solvesso 150® (ESSO),
4,5 g C.I. Pigment Rot 177
und 4,5 g des gemäss Beispiel 1 erhaltenen Molybdändisulfids
werden in einer Kugelmühle während 96 Stunden gut vermischt, wobei das Pigment und das Molybdändisulfid im Lackmedium fein dispergiert werden. Der Lack wird danach mit dem obigen Lösungsmittelgemisch Butylacetat/Xylol/Solvesso 150® auf eine Auslaufviskosität von ca. 18 Sekunden (20°C) nach DIN 4 verdünnt und darauf auf ein Metallblech appliziert. Nach kurzem Ablüften (2 Minuten bei ca. 40°C) wird diese pigmentierte Erstschichtlackierung mit einer unpigmentierten Zweitschichtlackierung bestehend aus
58,3 g Viacryl VC 373® (Acrylharz, 60 %-ig in Xylol, Vianora),
27,3 g Maprenal MF 590® (Melaminharz, 55 %-ig in Butanol, Hoechst),
1,0 g Siliconöl A® (1 %-ig in Xylol, Bayer),
1,0 g Tinuvin 900® (Benztriazolderivat, Ciba-Geigy),
5,4 g Xylol,
4,0 g Solvesso 150® (ESSO) und
3,0 g Aethylenglykolacetat
überdeckt, 30 Minuten bei 40°C abgelüftet und dann während 30 Minuten bei 135°C eingebrannt.

Man erhält eine metallisch schimmernde, rote Lackschicht mit ausgezeichneten Echtheiten. Sie weist einen hohen Glanz und eine ausgezeichnete Verteilung der Farbmittel auf. Beim Bestrahlen der Lackschicht mit Licht aus einer künstlichen Lichtquelle oder der Sonne erkennt man ein deutliches Glitzern, welches durch die im Lack vorhandenen Molybdändisulfidpartikeln hervorgerufen wird.

Beispiel 4: Verfährt man analog wie in Beispiel 2 beschrieben, verwendet aber anstelle von Cu-Phthalocyanin das Bisazokondensationspigment C.I. Pigment Gelb 128, so erhält man gleichmässig metallisch schimmernde grünstichig gelbe Färbungen mit analog guten Eigenschaften.

Beispiel 5: Verfährt man analog wie in Beispiel 2 beschrieben, verwendet aber anstelle von Cu-Phthalocyanin das Dioxazinpigment C.I. Pigment Violett 37, so erhält man gleichmässig metallisch schimmernde blauviolette Färbungen mit analog guten Eigenschaften.

Beispiel 6: Verfährt man analog wie in Beispiel 2 beschrieben, verwendet aber anstelle von Cu-Phthalocyanin das Perylenpigment PALIOGEN Rot 4120® (BASF, C.I. Pigment Rot 149), so erhält man bräunlich rote metallisch schimmernde Färbungen mit ausgezeichneten Hitze-, Licht- und Wetterbeständigkeiten.

Beispiel 7: Verfährt man analog wie in Beispiel 3 beschrieben, verwendet aber anstelle von C.I. Pigment Rot 177 das C.I. Pigment Blau 60, so erhält man gleichmässig metallisch schimmernde blaue Färbungen mit analog guten Eigenschaften.

Beispiel 8: Verfährt man analog wie in Beispiel 7 beschrieben, verwendet aber anstelle von 4,5 g C.I. Pigment Blau 60 2,0 g Kupferphthalocyanintetrasulfonsäure-(3-methoxypropyl)-amid, so erhält man gleichmässig metallisch schimmernde blaue Färbungen mit analog guten Eigenschaften.

Beispiel 9: Verfährt man analog wie in Beispiel 3 beschrieben, verwendet aber anstelle von C.I. Pigment Rot 177 das indigoide Pigment C.I. Pigment Rot 88, so erhält man gleichmässig metallisch schimmernde violette Färbungen mit analog guten Eigenschaften.

Beispiel 10: Verfährt man analog wie in Beispiel 3 beschrieben, verwendet aber anstelle von C.I. Pigment Rot 177 C.I. Pigment Grün 7, so erhält man gleichmässig farbstarke metallisch schimmernde grüne Färbungen mit analog guten Eigenschaften.

Beispiel 11: Verfährt man analog wie in Beispiel 4 beschrieben, verwendet aber anstelle von C.I. Pigment Gelb 128 eine transparente Form des Diketopyrrolopyrrolpigmentes C.I. Pigment Rot 255, so erhält man gleichmässig farbstarke metallisch schimmernde rote Färbungen mit analog guten Eigenschaften.

Beispiel 12: Verfährt man analog wie in Beispiel 2 beschrieben, verwendet aber anstelle von Cu-Phthalocyanin eine gemäss Beispiel 1 des US-Patents Nr. 4 810 304 beschriebene feste Pigmentlösung und anstelle von 3,0 g 2,0 g Molybdän-IV-sulfid, so erhält man gleichmässig metallisch schimmernde blaustichig rote Färbungen mit analog guten Eigenschaften.

Beispiel 13: Verwendet man die in Beispiel 2 beschriebene Cu-Phthalocyanin/Molybdän-IV-sulfidmischung und anstelle des lösungsmittelhaltigen Acryl-Melaminharz-Lacksystems ein handelübliches wässeriges Acryl-Melaminharz-Lacksystem und appliziert die erhaltene Lackzusammensetzung nach einem, dem Fachmann bekannten Verfahren, so erhält man gleichmässig metallisch schimmernde blaue Färbungen mit analog guten Eigenschaften.

Beispiel 14: Verfährt man analog wie in Beispiel 3 beschrieben, verwendet aber anstelle von 4,5 g 1,0 g des plättchenförmigen Molybdändisulfidpigmentes und anstelle von C.I. Pigment Rot 177 das Perlglanzpigment IRIODIN Ti-100® (MERCK), so erhält man eine gleichmässig schimmernde metallisch glänzende Färbung.

Beispiel 15: Verfährt man analog wie in Beispiel 2 beschrieben, verwendet aber anstelle eines Molybdändisulfidpigmentes mit einem Medianwert von 9,6 »m ein plättchenförmiges Molybdändisulfidpigment, dessen teilchengranulometrische Messung einen Medianwert von 4 »m aufweist, so erhält man eine metallisch schimmernde blaue Lackschicht, welche ausgezeichnete Glanzeigenschaften aufweist.

Beispiel 16: Vermischt man 0,1 g Perlglanz-Titandioxid/Glimmerpigment (IRIODIN Ti-100®, MERCK), 0,1 g des nach Beispiel 1 erhaltenen plättchenförmigen Molybdändisulfidpigmentes, 2,5 g FDA D+A Rot Nr. 7 (Farbmittel für Nagellack), 10,0 g Nitrocellulose, 10,0 g Ricinusalkydharz (ALKYDAL RU 50A®, BAYER AG), 5 g Acetyltributylcitrat, 20 ml Essigester, 43 ml Butylacetat, 6 ml Isopropylalkohol und 2,5 g eines organisch modifizierten Bentonits und homogenisert die Mischung nach üblichen Methoden, so erhält man einen Nagellack, der beim Applizieren violette seidenglänzende Nuancen ergibt.

## Patentansprüche

1. Anstrichstoff zur Herstellung einer Lackschicht mit einem metallischen Effekt ohne Mitverwendung von Metallpulvern, **dadurch gekennzeichnet**, dass der Anstrichstoff als farbgebende Komponente 0,001 bis 30 Gew.% mindestens eines organischen Pigmentes und/oder eines polymerlöslichen organischen Farbstoffes und/oder eines Perlglanzpigmentes und 0,001 bis 30 Gew.% Molybdändisulfid, bezogen auf die damit hergestellte trockene Lackschicht, enthält, worin das Molybdändisulfid in Schuppen- oder Plättchenform mit einem Teilchendurchmesser von weniger als 100 »m und einer Dicke von bis zu 4 »m vorliegt, und wobei der Anteil der Partikel des Molybdändisufids mit einer Grösse von 0,1 - 24 »m 60 - 95 Gew.% beträgt und dieser Anteil einen Medianwert von 1 bis 12 »m aufweist.

2. Anstrichstoff gemäss Anspruch 1, worin der Anstrichstoff ein Einbrennlack aus der Gruppe bestehend aus Acryl-, Alkyd-, Epoxy-, Phenol-, Melamin-, Harnstoff-, Polyester-, Polyurethan-, blockierten Isocyanat-, Benzoguanamin- oder Celluloseesterharzen, oder Kombinationen davon ist.

3. Anstrichstoff gemäss Anspruch 1, worin die Molybdändisulfidmenge 1,0 bis 15,0 Gew.-%, bezogen auf die damit hergestellte trockene Lackschicht, beträgt.

4. Anstrichstoff gemäss Anspruch 1, worin das organische Pigment ein Azo-, Azomethin-, Methin-, Anthrachinon-, Phthalocyanin-, Perinon-, Perylen-, Dioxazin-, Diketopyrrolopyrrol-, Thioindigo-, Iminoisoindolin-, Iminoisoindolinon-, Chinacridon-, Chinacridonchinon-, Flavanthron-, Indanthron-, Anthrapyrimidin- oder Chinophthalonpigment oder ein Metallkomplex von Azo-, Azomethin- oder Methinfarbstoffen ist.

5. Anstrichstoff gemäss Anspruch 1, worin neben dem Molybdändisulfid nur ein transparentes organisches Pigment verwendet wird.

6. Anstrichstoff gemäss Anspruch 1, worin das organische Pigment oder der polymerlösliche Farbstoff oder das Perlglanzpigment in einer Menge von 0,1 bis 10,0 Gew.-%, bezogen auf die damit hergestellte trockene Lackschicht, vorliegt.

7. Anstrichstoff gemäss Anspruch 1, worin der polymerlösliche Farbstoff ein 1:2-Chrom- oder 1:2-Kobaltkomplex von Monoazofarbstoffen ist.

8. Anstrichstoff gemäss Anspruch 1, worin ein mit Stearinsäure, Stearylamin, hydrierter Abietinsäure, epoxidiertem Sojabohnenöl oder mit einem aliphatischen 1,2-Diol behandeltes Molybdändisulfid verwendet wird.

9. Anstrichstoff gemäss Anspruch 1, worin der Anstrichstoff ein Acryl-Melamin-, Alkyd-Melamin- oder ein thermoplastisches Acrylharz oder ein wässriges Bindemittelsystem ist.

10. Anstrichstoff gemäss Anspruch 1, worin der Anstrichstoff ein wässriges Bindemittelsystem ist.

11. Anstrichstoff gemäss Anspruch 1, der nach Applikation auf dem Substrat mit einer Klarlackschicht überzogen ist.

12. Verwendung des Anstrichstoffes gemäss Anspruch 1 zum Färben von Metalloberflächen.

13. Verwendung des Austrichstoffes gemäss Anspruch 1 für die Herstellung von Automobillacken.

## Claims

1. A coating composition for producing a metal effect coating without the concomitant use of metal powders, which coating composition contains, as colouring component, 0.001 to 30 % by weight of at least one organic pigment and/or polymer-soluble organic dye and/or pearlescent pigment, and 0.001 to 30 % by weight of molybdenum disulfide, based on the dry coating produced therewith, where the molybdenum disulfide is in flake or platelet form having a particle diameter of less than 100 »m and a thickness of up to 4 »m, and where the proportion of particles of molybdenum disulfide having a size of 0.1-24 »m is 60-95 % by weight and this proportion has a median size of 1 to 12 »m.

2. A coating composition according to claim 1 which is a stoving enamel selected from the group consisting of acrylic, alkyd, epoxy, phenolic, melamine, urea, polyester, polyurethane, blocked isocyanate, benzoguanamine or cellulose ester resins, or combinations thereof.

3. A coating composition according to claim 1, wherein the concentration of molybdenum disulfide is 1.0 to 15.0 % by weight, based on the dry coating produced therewith.

4. A coating composition according to claim 1, wherein the organic pigment is selected from the group consisting of azo, azomethine, methine, anthraquinone, phthalocyanine, perinone, perylene, dioxazine, diketopyrrolopyrrole, thioindigo, iminoisoindoline, iminoisoindolinone, quinacridone, quinacridonequinone, flavanthrone, indanthrone, anthrapyrimidine or quinophthalone pigments, or a metal complex of azo, azomethine or methine dyes.

5. A coating composition according to claim 1, wherein only one transparent organic pigment is used in addition to the molybdenum disulfide.

6. A coating composition according to claim 1, which contains 0.1 to 10.0 % by weight of organic pigment or polymer-soluble dye or pearlescent pigment, based on the dry coating produced therewith.

7. Use of a coating composition according to claim 1, wherein the polymer-soluble dye is a 1:2 chromium or 1:2 cobalt complex of monoazo dyes.

8. A coating composition according to claim 1, wherein the molybdenum disulfide used is treated with stearic acid, stearylamine, hydrogenated abietic acid, epoxidized soya bean oil or with an aliphatic 1,2-diol.

9. A coating composition according to claim 1 which is an acrylic/melamine resin, alkyd/melamine resin or a thermoplastic acrylic resin or an aqueous binder system.

10. A coating composition according to claim 1 which is an aqueous binder system.

11. A coating composition according to claim 1 which, after application to the substrate, is provided with a clearcoat.

12. Use of a coating composition according to claim 1 for colouring metallic surfaces.

13. Use of a coating composition according to claim 1 for the preparation of automotive coatings.

## Revendications

1. Matière de revêtement pour préparer une couche de vernis avec un effet métallique sans utilisation conjointe de poudre métallique, la matière de revêtement étant caractérisée en ce qu'elle comporte comme composant de coloration de 0,001 à 30 % en poids d'au moins un pigment organique et/ou d'un colorant organique soluble dans les polymères et/ou d'un pigment à lustre nacré et de 0,001 à 30 % en poids de disulfure de molybdène, par rapport à la couche de vernis sèche ainsi obtenue, le disulfure de molybdène se présentant sous forme d'écailles ou de plaquettes avec un diamètre des particules inférieur à 100 »m et d'une épaisseur allant jusqu'à 4 »m, et où la portion des particules de disulfure de molybdène dont la taille est de 0,1 à 24 »m, représente de 60 à 95 % en poids, et cette portion ayant une valeur moyenne de 1 à 12 »m.

2. Matière de revêtement selon la revendication 1, qui est un vernis de thermodurcissable choisi dans le groupe constitué par les résines acryliques, les résines alkydes, les résines époxy, les résines phénoliques, les résines de mélamine, les résines d'urée, les résines de polyesters, les résines de polyuréthannes, les résines d'isocyanates bloqués, les résines de benzoguanamine ou les résines d'esters cellulosiques ou une combinaison de celles-ci.

3. Matière de revêtement selon la revendication 1, où la quantité de disulfure de molybdène est de 1,0 à 15,0 % en poids par rapport à la couche séchée de vernis ainsi obtenue.

4. Matière de revêtement selon la revendication 1, où le pigment organique est un colorant azoïque, un colorant d'azométhine, de méthine, d'anthraquinone, de phtalocyanine, de périnone, de pérylène, de dioxazine, de dicétopyrrolopyrrole, de thioindigo, d'iminoisoindoline, d'iminoisoindolinone, de quinacridone, de quinachridonequinone, de flavanthrone, d'indanthrone, d'anthrapyrimidine ou de quinophtalone, ou un complexe métallique d'un colorant azoïque, d'un colorant d'azométhine ou de méthine.

5. Matière de revêtement selon la revendication 1, où en plus du disulfure de molybdène, on n'utilise qu'un pigment organique transparent.

6. Matière de revêtement selon la revendication 1, où le pigment organique ou le colorant soluble dans les polymères ou le pigment à lustre nacré se présentent dans une quantité de 0,1 à 10,0 % en poids, par rapport à la couche séchée de vernis ainsi obtenue.

7. Matière de revêtement selon la revendication 1, où le colorant soluble dans les polymères est un complexe de 1:2-chrome ou 1:2-cobalt de colorant monoazoïque.

8. Matière de revêtement selon la revendication 1, où on utilise un disulfure de molybdène traité avec de l'acide stéarique, de la stéarylamine, de l'acide abiétique hydrogéné,de l'huile de graine de soja époxydée ou avec un 1,2-diol aliphatique.

9. Matière de revêtement selon la revendication 1, où la matière de revêtement est une résine acrylique-mélamine, une résine alkyde-mélamine ou une résine acrylique thermoplastique ou un système liant aqueux.

10. Matière de revêtement selon la revendication 1, où la matière de revêtement est un système liant aqueux.

11. Matière de revêtement selon la revendication 1, qui, après application sur le substrat, est recouverte d'une couche de vernis transparent.

12. Utilisation de la matière de revêtement selon la revendication 1, pour colorer des surfaces métalliques.

13. Utilisation de la matière de revêtement selon la revendication 1, pour la préparation de vernis d'automobiles.
